(19) Europäisches Patentamt
European Patent Office
Office européen des brevets

(11) **EP 4 495 663 A1**

(12) **EUROPEAN PATENT APPLICATION**
published in accordance with Art. 153(4) EPC

(43) Date of publication:
**22.01.2025 Bulletin 2025/04**

(21) Application number: **23770317.8**

(22) Date of filing: **24.02.2023**

(51) International Patent Classification (IPC):
***G02B 27/02*** *(2006.01)* ***G02B 5/30*** *(2006.01)*

(52) Cooperative Patent Classification (CPC):
**G02B 5/30; G02B 27/02**

(86) International application number:
**PCT/JP2023/006725**

(87) International publication number:
**WO 2023/176358 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.03.2022 JP 2022039285
14.03.2022 JP 2022039286
10.05.2022 JP 2022077632**

(71) Applicant: **Nitto Denko Corporation
Ibaraki-shi, Osaka 567-8680 (JP)**

(72) Inventor: **GOTO Shusaku
Ibaraki-shi, Osaka 567-8680 (JP)**

(74) Representative: **Hoffmann Eitle
Patent- und Rechtsanwälte PartmbB
Arabellastraße 30
81925 München (DE)**

(54) **LENS UNIT, LAMINATE, DISPLAY BODY, AND DISPLAY BODY PRODUCTION METHOD AND DISPLAY METHOD**

(57) Provided is a lens unit that can achieve a reduction in weight of a pair of VR goggles and an improvement in definition thereof. The lens unit according to one embodiment of the present invention is a lens unit to be used in a display system configured to display an image to a user, the lens unit including: a reflecting portion including a reflection-type polarizing member and an absorption-type polarizing member arranged on a front side of the reflection-type polarizing member, the reflecting portion being configured to reflect light, which has been emitted to the front side from a display surface of a display element configured to display the image, and has passed through a polarizing member and a first λ/4 member; a first lens portion arranged on an optical path between the display element and the reflecting portion; a half mirror arranged between the display element and the first lens portion, the half mirror being configured to transmit the light emitted from the display element and to reflect the light reflected by the reflecting portion toward the reflecting portion; and a second λ/4 member arranged on an optical path between the half mirror and the reflecting portion, wherein a reflection axis transmittance when polarized light in a reflection axis direction of the reflection-type polarizing member is caused to enter a laminate of the reflection-type polarizing member and the absorption-type polarizing member from a reflection-type polarizing member side is 0.5% or less.

FIG. 1

**Description**

Technical Field

The present invention relates to a lens unit, a laminate, a display body, a method of producing a display body, and a display method.

Background Art

Image display apparatus typified by a liquid crystal display apparatus and an electroluminescence (EL) display apparatus (e.g., an organic EL display apparatus) have been rapidly gaining more widespread use. In the image display apparatus, an optical member, such as a polarizing member or a retardation member, has been generally used for achieving image display and improving the performance of the image display (see, for example, Patent Literature 1).
In recent years, new applications of the image display apparatus have been developed. For example, a pair of goggles (VR goggles) with a display for achieving virtual reality (VR) has started to be commercialized. A reduction in weight of the pair of VR goggles, an improvement in definition thereof, and the like have been desired because an investigation has been made on the utilization of the pair of VR goggles in various fields. The weight reduction may be achieved by, for example, thinning a lens to be used in the pair of VR goggles. Meanwhile, the development of an optical member suitable for a display system using a thin lens has also been desired.

Citation List

Patent Literature

[PTL 1] JP 2021-103286 A

Summary of Invention

Technical Problem

In view of the foregoing, a primary object of the present invention is to provide a lens unit that can achieve a reduction in weight of a pair of VR goggles and an improvement in definition thereof.

Solution to Problem

1. According to one embodiment of the present invention, there is provided a lens unit to be used in a display system configured to display an image to a user, the lens unit including: a reflecting portion including a reflection-type polarizing member and an absorption-type polarizing member arranged on a front side of the reflection-type polarizing member, the reflecting portion being configured to reflect light, which has been emitted to the front side from a display surface of a display element configured to display the image, and has passed through a polarizing member and a first $\lambda/4$ member; a first lens portion arranged on an optical path between the display element and the reflecting portion; a half mirror arranged between the display element and the first lens portion, the half mirror being configured to transmit the light emitted from the display element and to reflect the light reflected by the reflecting portion toward the reflecting portion; and a second $\lambda/4$ member arranged on an optical path between the half mirror and the reflecting portion, wherein a reflection axis transmittance when polarized light in a reflection axis direction of the reflection-type polarizing member is caused to enter a laminate of the reflection-type polarizing member and the absorption-type polarizing member from a reflection-type polarizing member side is 0.5% or less.

2. In the lens unit according to the above-mentioned item 1, a reflection axis of the reflection-type polarizing member and an absorption axis of the absorption-type polarizing member may be arranged parallel to each other.

3. In the lens unit according to the above-mentioned item 1 or 2, the first lens portion and the half mirror may be integrated.

4. The lens unit according to any one of the above-mentioned items 1 to 3 may further include a second lens portion arranged on the front side of the reflecting portion.

5. In the lens unit according to any one of the above-mentioned items 1 to 4, an angle formed by an absorption axis of the polarizing member in the display element and a slow axis of the first λ/4 member may be from 40° to 50°, and an angle formed by the absorption axis of the polarizing member in the display element and a slow axis of the second λ/4 member may be from 40° to 50°.

6. According to one embodiment of the present invention, there is provided a laminate to be used in the reflecting portion of the lens unit of any one of the above-mentioned items 1 to 5, the laminate including: the reflection-type polarizing member; and the absorption-type polarizing member.

7. In the laminate according to the above-mentioned item 6, the reflection-type polarizing member and the absorption-type polarizing member may be laminated via an adhesion layer.

8. In the laminate according to the above-mentioned item 6 or 7, a reflection axis of the reflection-type polarizing member and an absorption axis of the absorption-type polarizing member may be arranged parallel to each other.

9. According to one embodiment of the present invention, there is provided a display body, including the lens unit of any one of the above-mentioned items 1 to 5.

10. According to one embodiment of the present invention, there is provided a method of producing a display body including the lens unit of any one of the above-mentioned items 1 to 5.

11. According to one embodiment of the present invention, there is provided a display method, including: a step of passing light representing an image, which has been emitted through a polarizing member and a first λ/4 member, through a half mirror and a first lens portion; a step of passing the light, which has passed through the half mirror and the first lens portion, through a second λ/4 member; a step of reflecting the light, which has passed through the second λ/4 member, toward the half mirror with a reflecting portion including a reflection-type polarizing member; a step of enabling the light, which has been reflected by the reflecting portion and the half mirror, to penetrate through the reflection-type polarizing member of the reflecting portion with the second λ/4 member; and a step of causing the light, which has penetrated through the reflection-type polarizing member, to penetrate through an absorption-type polarizing member, wherein a reflection axis transmittance when polarized light in a reflection axis direction of the reflection-type polarizing member is caused to enter a laminate of the reflection-type polarizing member and the absorption-type polarizing member from a reflection-type polarizing member side is 0.5% or less.

Advantageous Effects of Invention

According to the lens unit of the embodiment of the present invention, the reduction in weight of the pair of VR goggles and the improvement in definition thereof can be achieved.

Brief Description of Drawings

FIG. **1** is a schematic view for illustrating the schematic configuration of a display system according to one embodiment of the present invention.

FIG. **2** is a schematic sectional view for illustrating an example of a laminate to be used in the reflecting portion of the display system illustrated in FIG. **1.**

FIG. **3** is a schematic perspective view for illustrating an example of a multilayer structure in a reflection-type polarizing film.

Description of Embodiments

Embodiments of the present invention are described below with reference to the drawings. However, the present invention is not limited to these embodiments. In addition, for clearer illustration, some widths, thicknesses, shapes, and the like of respective portions may be schematically illustrated in the drawings in comparison to the embodiments. However, the widths, the thicknesses, the shapes, and the like are each merely an example, and do not limit the understanding of the present invention.

(Definitions of Terms and Symbols)

The definitions of terms and symbols used herein are as described below.

(1) Refractive Indices (nx, ny, and nz)

"nx" represents a refractive index in a direction in which an in-plane refractive index is maximum (that is, slow axis direction), "ny" represents a refractive index in a direction perpendicular to a slow axis in a plane (that is, fast axis direction), and "nz" represents a refractive index in a thickness direction.

(2) In-plane Retardation (Re)

"Re($\lambda$)" refers to an in-plane retardation measured at 23°C with light having a wavelength of $\lambda$ nm. For example, "Re(550)" refers to an in-plane retardation measured at 23°C with light having a wavelength of 550 nm. The Re($\lambda$) is determined from the equation "Re($\lambda$)=(nx-ny)×d" when the thickness of a layer (film) is represented by "d" (nm).

(3) Thickness Direction Retardation (Rth)

"Rth($\lambda$)" refers to a thickness direction retardation measured at 23°C with light having a wavelength of $\lambda$ nm. For example, "Rth(550)" refers to a thickness direction retardation measured at 23°C with light having a wavelength of 550 nm. The Rth($\lambda$) is determined from the equation "Rth($\lambda$)=(nx-nz)×d" when the thickness of a layer (film) is represented by "d" (nm).

(4) Nz Coefficient

An Nz coefficient is determined from the equation "Nz=Rth/Re".

(5) Angle

When reference is made to an angle herein, the angle encompasses both angles in a clockwise direction and a counterclockwise direction with respect to a reference direction. Accordingly, for example, the term "45°" means ±45°.

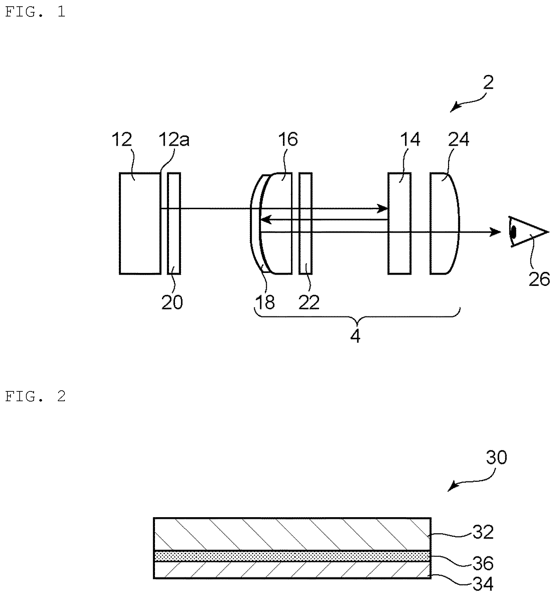

FIG. **1** is a schematic view for illustrating the schematic configuration of a display system according to one embodiment of the present invention. The arrangement, shapes, and the like of the respective constituents of a display system **2** are schematically illustrated in FIG. **1**. The display system **2** includes: a display element **12**; a reflecting portion **14**; a first lens portion **16**; a half mirror **18**; a first retardation member **20**; a second retardation member **22**; and a second lens portion **24**. The reflecting portion **14** is arranged on a front side of the display element **12**, that is, on the display surface **12a** side thereof, and can reflect light emitted from the display element **12**. The first lens portion **16** is arranged on an optical path between the display element **12** and the reflecting portion **14**, and the half mirror **18** is arranged between the display element **12** and the first lens portion **16**. The first retardation member **20** is arranged on an optical path between the display element **12** and the half mirror **18**, and the second retardation member **22** is arranged on an optical path between the half mirror **18** and the reflecting portion **14**.
The half mirror and the constituents arranged on the front side thereof (in the illustrated example, the half mirror **18**, the first lens portion **16**, the second retardation member **22**, the reflecting portion **14**, and the second lens portion **24**) are sometimes collectively referred to as "lens unit (lens unit **4**)."
The display element **12** is, for example, a liquid crystal display or an organic EL display, and has a display surface **12a** for displaying an image. The light to be emitted from the display surface **12a** passes through, for example, a polarizing member (typically, a polarizing film) that may be incorporated into the display element **12** to be emitted as first linearly polarized light.
The first retardation member **20** is a $\lambda$/4 member that can convert the first linearly polarized light, which has entered the first retardation member **20**, into first circularly polarized light (the first retardation member is hereinafter sometimes referred to as "first $\lambda$/4 member"). The first retardation member **20** may be arranged integrally with the display element **12**.
The half mirror **18** transmits the light emitted from the display element **12**, and reflects the light reflected by the reflecting portion **14** toward the reflecting portion **14**. The half mirror **18** is arranged integrally with the first lens portion **16**.
The second retardation member **22** is a $\lambda$/4 member that enables the light, which has been reflected by the reflecting portion **14** and the half mirror **18**, to penetrate through the reflecting portion **14** including a reflection-type polarizing member (the second retardation member is hereinafter sometimes referred to as "second $\lambda$/4 member"). The second retardation member **22** may be arranged integrally with the first lens portion **16**.

The first circularly polarized light emitted from the first λ/4 member **20** passes through the half mirror **18** and the first lens portion **16,** and is converted into second linearly polarized light by the second λ/4 member **22.** The second linearly polarized light emitted from the second λ/4 member **22** is reflected toward the half mirror **18** without penetrating through the reflection-type polarizing member in the reflecting portion **14.** At this time, the polarization direction of the second linearly polarized light that has entered the reflection-type polarizing member in the reflecting portion **14** is the same direction as that of the reflection axis of the reflection-type polarizing member. Accordingly, the second linearly polarized light that has entered the reflecting portion is reflected by the reflection-type polarizing member.

The second linearly polarized light reflected by the reflecting portion **14** is converted into second circularly polarized light by the second λ/4 member **22,** and the second circularly polarized light emitted from the second λ/4 member **22** passes through the first lens portion **16,** and is reflected by the half mirror **18.** The second circularly polarized light reflected by the half mirror **18** passes through the first lens portion **16,** and is converted into third linearly polarized light by the second λ/4 member **22.** The third linearly polarized light penetrates through the reflection-type polarizing member in the reflecting portion **14.** At this time, the polarization direction of the third linearly polarized light that has entered the reflection-type polarizing member in the reflecting portion **14** is the same direction as that of the transmission axis of the reflection-type polarizing member. Accordingly, the third linearly polarized light that has entered the reflecting portion **14** penetrates through the reflection-type polarizing member.

The light that has penetrated through the reflecting portion **14** passes through the second lens portion **24** to enter an eye **26** of a user.

For example, the absorption axis of the polarizing member in the display element **12** and the reflection axis of the reflection-type polarizing member in the reflecting portion **14** may be arranged substantially parallel to each other, or may be arranged substantially perpendicular to each other. An angle formed by the absorption axis of the polarizing member in the display element **12** and the slow axis of the first retardation member **20** is, for example, from 40° to 50°, and may be from 42° to 48°, or may be about 45°. An angle formed by the absorption axis of the polarizing member in the display element **12** and the slow axis of the second retardation member **22** is, for example, from 40° to 50°, and may be from 42° to 48°, or may be about 45°.

The in-plane retardation Re(550) of the first retardation member **20** is, for example, from 100 nm to 190 nm, and may be from 110 nm to 180 nm, may be from 130 nm to 160 nm, or may be from 135 nm to 155 nm.

The first retardation member **20** preferably shows such a reverse wavelength dispersion characteristic that its retardation value increases with an increase in wavelength of measurement light. The ratio "Re(450)/Re(550)" of the first retardation member **20** is, for example, 0.75 or more and less than 1, and may be 0.8 or more and 0.95 or less.

The in-plane retardation Re(550) of the second retardation member **22** is, for example, from 100 nm to 190 nm, and may be from 110 nm to 180 nm, may be from 130 nm to 160 nm, or may be from 135 nm to 155 nm.

The second retardation member **22** preferably shows such a reverse wavelength dispersion characteristic that its retardation value increases with an increase in wavelength of measurement light. The ratio "Re(450)/Re(550)" of the second retardation member **22** is, for example, 0.75 or more and less than 1, and may be 0.8 or more and 0.95 or less.

The reflecting portion **14** may include an absorption-type polarizing member in addition to the reflection-type polarizing member. The absorption-type polarizing member may be arranged on the front side of the reflection-type polarizing member. The reflection axis of the reflection-type polarizing member and the absorption axis of the absorption-type polarizing member may be arranged substantially parallel to each other, and the transmission axis of the reflection-type polarizing member and the transmission axis of the absorption-type polarizing member may be arranged substantially parallel to each other. When the reflecting portion **14** includes the absorption-type polarizing member, the reflecting portion **14** may include a laminate including the reflection-type polarizing member and the absorption-type polarizing member.

FIG. **2** is a schematic sectional view for illustrating an example of the laminate to be used in the reflecting portion of the display system illustrated in FIG. **1.** A laminate **30** includes a reflection-type polarizing member **32** and an absorption-type polarizing member **34,** and the reflection-type polarizing member **32** and the absorption-type polarizing member **34** are laminated via an adhesion layer **36.** The use of the adhesion layer fixes the reflection-type polarizing member **32** and the absorption-type polarizing member **34** to each other, and hence can prevent a shift in the axial arrangement of the reflection axis of the member **32** and the absorption axis of the member **34** (the transmission axis of the member **32** and the transmission axis of the member **34).** In addition, the use of the layer can suppress an adverse effect due to an air layer that may be formed between the reflection-type polarizing member **32** and the absorption-type polarizing member **34.** The adhesion layer **36** may be formed from an adhesive, or may be formed from a pressure-sensitive adhesive. The thickness of the adhesion layer **36** is, for example, from 0.05 μm to 30 μm, preferably from 3 μm to 20 μm, more preferably from 5 μm to 15 μm.

The above-mentioned reflection-type polarizing member can transmit polarized light (typically, linearly polarized light) parallel to its transmission axis while maintaining the polarization state of the light, and can reflect light in any other polarization state. The reflection-type polarizing member typically includes a film having a multilayer structure (sometimes referred to as "reflection-type polarizing film"). In this case, the thickness of the reflection-type polarizing member is, for example, from 10 μm to 150 μm, preferably from 20 μm to 100 μm, more preferably from 30 μm to 60 μm.

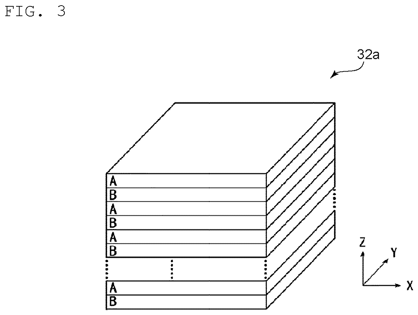

FIG. **3** is a schematic perspective view for illustrating an example of the multilayer structure in the reflection-type polarizing film. A multilayer structure **32a** alternately includes a layer A having birefringence and a layer B substantially free of birefringence. The total number of the layers for forming the multilayer structure may be from 50 to 1,000. For example, the refractive index nx of the A layer in an x-axis direction is larger than the refractive index ny thereof in a y-axis direction, the refractive index nx of the B layer in the x-axis direction and the refractive index ny thereof in the y-axis direction are substantially identical to each other, and a difference in refractive index between the A layer and the B layer is large in the x-axis direction, and is substantially zero in the y-axis direction. As a result, the x-axis direction may serve as a reflection axis, and the y-axis direction may serve as a transmission axis. The difference in refractive index between the A layer and the B layer in the x-axis direction is preferably from 0.2 to 0.3.

The above-mentioned A layer typically includes a material that expresses birefringence by being stretched. Examples of such material include a naphthalene dicarboxylic acid polyester (e.g., polyethylene naphthalate), polycarbonate, and an acrylic resin (e.g., polymethyl methacrylate). The above-mentioned B layer typically includes a material that is substantially free from expressing birefringence even when stretched. Such material is, for example, a copolyester of naphthalene dicarboxylic acid and terephthalic acid. The above-mentioned multilayer structure may be formed by combining coextrusion and stretching. For example, the material for forming the A layer and the material for forming the B layer are extruded, and are then multilayered (with, for example, a multiplier). Next, the resultant multilayer laminate is stretched. The x-axis direction in the illustrated example may correspond to the stretching direction.

A commercial product of the reflection-type polarizing film is, for example, a product available under the product name "DBEF" or "APF" from 3M Company, or a product available under the product name "APCF" from Nitto Denko Corporation.

The cross transmittance (Tc) of the reflection-type polarizing member (reflection-type polarizing film) may be, for example, from 0.01% to 3%. The single layer transmittance (Ts) of the reflection-type polarizing member (reflection-type polarizing film) is, for example, from 43% to 49%, preferably from 45% to 47%. The polarization degree (P) of the reflection-type polarizing member (reflection-type polarizing film) may be, for example, from 92% to 99.99%.

The above-mentioned absorption-type polarizing member may typically include a resin film containing a dichroic substance (sometimes referred to as "absorption-type polarizer"). The thickness of the absorption-type polarizer is, for example, 1 $\mu$m or more and 20 $\mu$m or less, and may be 2 $\mu$m or more and 15 $\mu$m or less, may be 12 $\mu$m or less, may be 10 $\mu$m or less, may be 8 $\mu$m or less, or may be 5 $\mu$m or less.

The above-mentioned absorption-type polarizer may be produced from a single-layer resin film, or may be produced by using a laminate of two or more layers.

When the absorption-type polarizer is produced from the single-layer resin film, the absorption-type polarizer may be obtained by, for example, subjecting a hydrophilic polymer film, such as a polyvinyl alcohol (PVA)-based film, a partially formalized PVA-based film, or an ethylene-vinyl acetate copolymer-based partially saponified film, to dyeing treatment with a dichroic substance, such as iodine or a dichroic dye, stretching treatment, or the like. Of such polarizers, an absorption-type polarizer obtained by dyeing a PVA-based film with iodine and uniaxially stretching the dyed film is preferred.

The above-mentioned dyeing with iodine is performed by, for example, immersing the PVA-based film in an aqueous solution of iodine. The stretching ratio of the above-mentioned uniaxial stretching is preferably from 3 times to 7 times. The stretching may be performed after the dyeing treatment, or may be performed while the dyeing is performed. Alternatively, the dyeing may be performed after the stretching. The PVA-based film is subjected to swelling treatment, cross-linking treatment, washing treatment, drying treatment, or the like as required.

When the absorption-type polarizer is produced by using the above-mentioned laminate of two or more layers, the laminate is, for example, a laminate of a resin substrate and a PVA-based resin layer (PVA-based resin film) laminated on the resin substrate or a laminate of a resin substrate and a PVA-based resin layer formed on the resin substrate through application. The absorption-type polarizer obtained by using the laminate of the resin substrate and the PVA-based resin layer formed on the resin substrate through application may be produced, for example, by: applying a PVA-based resin solution to the resin substrate; drying the solution to form the PVA-based resin layer on the resin substrate, to thereby provide the laminate of the resin substrate and the PVA-based resin layer; and stretching and dyeing the laminate to turn the PVA-based resin layer into the absorption-type polarizer. In this embodiment, a polyvinyl alcohol-based resin layer containing a halide and a polyvinyl alcohol-based resin is preferably formed on one side of the resin substrate. The stretching typically includes stretching the laminate under a state in which the laminate is immersed in an aqueous solution of boric acid. Further, the stretching may further include in-air stretching of the laminate at high temperature (e.g., 95°C or more) before the stretching in the aqueous solution of boric acid as required. In addition, in this embodiment, the laminate is preferably subjected to drying shrinkage treatment, which includes heating the laminate, while conveying the laminate in its lengthwise direction, to shrink the laminate by 2% or more in its widthwise direction. The production method of this embodiment typically includes subjecting the laminate to in-air auxiliary stretching treatment, dyeing treatment, underwater stretching treatment, and drying shrinkage treatment in the stated order. When the auxiliary stretching is introduced, even in the case where PVA is applied onto a thermoplastic resin, the crystallinity of PVA can be improved, and hence high optical characteristics can be achieved. In addition, when the alignment property of PVA is improved in advance simultaneously with the crystallinity improvement, problems, such as a reduction in alignment property of PVA and the dissolution thereof, can be prevented at the time of the immersion of the laminate in water in the subsequent dyeing step or stretching step, and hence high optical characteristics can be achieved. Further, in the case where the PVA-based resin layer is immersed in a liquid, the disturbance of the alignment of the molecules of polyvinyl alcohol and reductions in alignment properties thereof can be suppressed as compared to those in the case where the PVA-based resin layer is free of any halide. Thus, the optical characteristics of the absorption-type polarizer to be obtained through treatment steps performed by immersing the laminate in a liquid, such as the dyeing treatment and the underwater stretching treatment, can be improved. Further, the optical characteristics can be improved by shrinking the laminate in its widthwise direction through the drying shrinkage treatment. The resultant laminate of the resin substrate and the absorption-type polarizer may be used as it is (that is, the resin substrate may be used as a protective layer for the absorption-type polarizer), or may be used by laminating any appropriate protective layer in accordance with purposes on the peeled surface on which the resin substrate has been peeled from the laminate of the resin substrate and the absorption-type polarizer, or on a surface on an opposite side to the peeled surface. Details about such method of producing the absorption-type polarizer are described in, for example, JP 2012-73580 A or JP 6470455 B1, the description of which is incorporated herein by reference in its entirety.

The cross transmittance (Tc) of the absorption-type polarizing member (absorption-type polarizer) is preferably 0.5% or less, more preferably 0.1% or less, still more preferably 0.05% or less. The single layer transmittance (Ts) of the absorption-type polarizing member (absorption-type polarizer) is, for example, from 41.0% to 45.0%, preferably 42.0% or more. The polarization degree (P) of the absorption-type polarizing member (absorption-type polarizer) is, for example, from 99.0% to 99.997%, preferably 99.9% or more.

The reflection axis transmittance of the reflecting portion (when polarized light in a reflection axis direction is caused to enter the reflecting portion) is preferably 0.5% or less, more preferably 0.1% or less, still more preferably 0.05% or less. When such reflection axis transmittance is satisfied, a user can be suppressed from viewing a residual image (ghost), and hence an excellent display characteristic can be achieved.

The cross transmittance (Tc) of the reflecting portion is preferably 0.5% or less, more preferably 0.1% or less, still more preferably 0.05% or less. When such cross transmittance is satisfied, a user can be suppressed from viewing a residual image (ghost), and hence an excellent display characteristic can be achieved. The single layer transmittance (Ts) of the reflecting portion is preferably from 40.0% to 45.0%, more preferably 41.0% or more. The polarization degree (P) of the reflecting portion is preferably from 99.0% to 99.997%, more preferably 99.9% or more.

The optical characteristics of the above-mentioned reflecting portion may correspond to the optical characteristics of the reflection-type polarizing member, or may correspond to the optical characteristics of the laminate of the reflection-type polarizing member and the absorption-type polarizing member. The optical characteristics of the above-mentioned reflecting portion can be achieved in an extremely satisfactory manner by combining the reflection-type polarizing member with the absorption-type polarizing member.

Examples

The present invention is specifically described below by way of Examples. However, the present invention is not limited to these Examples. A thickness is a value measured by the following measurement method.

<Thickness>

A thickness of 10 $\mu$m or less was measured with a scanning electron microscope (manufactured by JEOL Ltd., product name: "JSM-7100F"). A thickness of more than 10 $\mu$m was measured with a digital micrometer (manufactured by Anritsu Corporation, product name: "KC-351C").

[Example 1-1]

(Production of Polarizer 1)

An amorphous isophthalic acid-copolymerized polyethylene terephthalate film (thickness: 100 $\mu$m) having an elongate shape and having a water absorption ratio of 0.75% and a Tg of about 75°C was used as a thermoplastic resin substrate. One surface of the resin substrate was subjected to corona treatment.

A product obtained by adding 13 parts by weight of potassium iodide to 100 parts by weight of a PVA-based resin, which had been obtained by mixing polyvinyl alcohol (polymerization degree: 4,200, saponification degree: 99.2 mol%) and acetoacetyl-modified PVA (manufactured by Mitsubishi Chemical Corporation, product name: "GOHSENX Z410") at 9:1, was dissolved in water to prepare a PVA aqueous solution (application liquid).

The above-mentioned PVA aqueous solution was applied to the corona-treated surface of the resin substrate, and was dried at 60°C to form a PVA-based resin layer having a thickness of 13 μm. Thus, a laminate was produced.

The resultant laminate was subjected to free-end uniaxial stretching in its longitudinal direction (lengthwise direction) at a ratio of 2.4 times between rolls having different peripheral speeds in an oven at 130°C (in-air auxiliary stretching treatment).

Next, the laminate was immersed in an insolubilizing bath having a liquid temperature of 40°C (aqueous solution of boric acid obtained by blending 100 parts by weight of water with 4 parts by weight of boric acid) for 30 seconds (insolubilizing treatment).

Next, the laminate was immersed in a dyeing bath having a liquid temperature of 30°C (aqueous solution of iodine obtained by blending 100 parts by weight of water with iodine and potassium iodide at a weight ratio of 1:7) for 60 seconds while the concentration of the aqueous solution was adjusted so that the single layer transmittance (Ts) of a polarizer to be finally obtained became 42.0% or more (dyeing treatment).

Next, the laminate was immersed in a cross-linking bath having a liquid temperature of 40°C (aqueous solution of boric acid obtained by blending 100 parts by weight of water with 3 parts by weight of potassium iodide and 5 parts by weight of boric acid) for 30 seconds (cross-linking treatment).

After that, while the laminate was immersed in an aqueous solution of boric acid having a liquid temperature of 70°C (boric acid concentration: 4 wt%, potassium iodide concentration: 5 wt%), the laminate was uniaxially stretched in the longitudinal direction (lengthwise direction) between rolls having different peripheral speeds so that the total stretching ratio became 5.5 times (underwater stretching treatment).

After that, the laminate was immersed in a washing bath having a liquid temperature of 20°C (aqueous solution obtained by blending 100 parts by weight of water with 4 parts by weight of potassium iodide) (washing treatment).

After that, the laminate was brought into contact with a SUS-made heating roll whose surface temperature was kept at 75°C for about 2 seconds while being dried in an oven kept at 90°C (drying shrinkage treatment). The percentage by which the laminate was shrunk in its widthwise direction by the drying shrinkage treatment was 5.2%.

Thus, a polarizer 1 (absorption-type polarizer) having a thickness of 5 μm was formed on the resin substrate.

(Production of Absorption-type Polarizing Film)

A cycloolefin-based resin film having a thickness of 25 μm was bonded as a protective layer to the surface of the resultant absorption-type polarizer (the surface of the laminate on the polarizer 1 side) via a UV-curable adhesive. Specifically, the adhesive was applied so that the thickness of an adhesive layer after its curing became about 1 μm, followed by the bonding with a roller machine. After that, a UV ray was applied from the cycloolefin-based resin film side to cure the adhesive. Next, the resin substrate was peeled. Thus, an absorption-type polarizing film having the configuration "cycloolefin-based resin film/absorption-type polarizer" was obtained.

(Production of Film for Reflecting Portion)

The absorption-type polarizing film was bonded to a reflection-type polarizing film ("APCFG4" manufactured by Nitto Denko Corporation) via a pressure-sensitive adhesive so that the reflection axis of the reflection-type polarizing film and the absorption axis of the absorption-type polarizer were arranged parallel to each other. Thus, a film (laminated film) for a reflecting portion was obtained.

[Example 1-2 and Example 1-3]

A film for a reflecting portion was obtained in the same manner as in Example 1-1 except that in the production of the polarizer 1, the conditions for the dyeing treatment were changed.

[Example 1-4]

A film for a reflecting portion was obtained in the same manner as in Example 1-1 except that the following polarizer 2 was used instead of the polarizer 1.

(Production of Polarizer 2)

An elongate roll of a polyvinyl alcohol (PVA)-based resin film (manufactured by Kuraray Co., Ltd., product name: "PE3000") having a thickness of 30 μm was uniaxially stretched in its lengthwise direction with a roll stretching machine so that the total stretching ratio became 5.9 times. Simultaneously with the stretching, the film was subjected to swelling treatment, dyeing treatment, cross-linking treatment, and washing treatment in the stated order. After that, the film was finally subjected to drying treatment to produce a polarizer 2 having a thickness of 12 μm.

In the above-mentioned swelling treatment, the film was stretched at a ratio of 2.2 times while being treated with pure water at 20°C. Next, in the dyeing treatment, the film was stretched at a ratio of 1.4 times while being treated in an aqueous solution at 30°C containing iodine and potassium iodide at a weight ratio of 1:7, whose iodine concentration had been adjusted so that the single layer transmittance of a polarizer to be obtained became 42.0% or more. Next, two-stage cross-linking treatment was adopted as the cross-linking treatment. In the first-stage cross-linking treatment, the film was stretched at a ratio of 1.2 times while being treated in an aqueous solution at 40°C having dissolved therein boric acid and potassium iodide. The boric acid content and potassium iodide content of the aqueous solution of the first-stage cross-linking treatment were set to 5.0 wt% and 3.0 wt%, respectively. In the second-stage cross-linking treatment, the film was stretched at a ratio of 1.6 times while being treated in an aqueous solution at 65°C having dissolved therein boric acid and potassium iodide. The boric acid content and potassium iodide content of the aqueous solution of the second-stage cross-linking treatment were set to 4.3 wt% and 5.0 wt%, respectively. Next, in the washing treatment, the film was treated with a potassium iodide aqueous solution at 20°C. The potassium iodide content of the aqueous solution of the washing treatment was set to 2.6 wt%. Finally, the film was subjected to the drying treatment at 70°C for 5 minutes. Thus, the polarizer 2 was obtained.

[Example 1-5]

A film for a reflecting portion was obtained in the same manner as in Example 1-4 except that in the production of the polarizer 2, the conditions for the dyeing treatment were changed.

[Example 2-1 to Example 2-5]

Films for reflecting portions were each obtained in the same manner as in Example 1-1 to Example 1-5 except that "APCFG5" manufactured by Nitto Denko Corporation was used as a reflection-type polarizing film.

[Comparative Example 1]

"APCFG4" manufactured by Nitto Denko Corporation (whose Ts and P measured by methods to be described later were 46.8% and 96.4%, respectively) was used as a film for a reflecting portion.

[Comparative Example 2]

"APCFG5" manufactured by Nitto Denko Corporation (whose Ts and P measured by methods to be described later were 47.0% and 93.1%, respectively) was used as a film for a reflecting portion.

The films of Examples and Comparative Examples were subjected to the following evaluations. The evaluation results are summarized in Table 1.

<Evaluation>

·Single Layer Transmittance and Polarization Degree

The single layer transmittance Ts, parallel transmittance Tp, and cross transmittance Tc of each of the absorption-type polarizers (absorption-type polarizing films) were measured with a UV-visible spectrophotometer (manufactured by Otsuka Electronics Co., Ltd., "LPF-200"). The Ts, the Tp, and the Tc are each a Y value measured with the two-degree field of view (C light source) of JIS Z 8701 and subjected to visibility correction.

In addition, the polarization degree P of each of the films was determined from the Tp and the Tc thus obtained by using the following equation.

$$\text{Polarization degree P (\%)} = \{(Tp-Tc)/(Tp+Tc)\}^{1/2} \times 100$$

·Reflection Axis Transmittance

The reflection axis transmittance of each of the films for reflecting portions was measured with a UV-visible spectrophotometer (manufactured by Otsuka Electronics Co., Ltd., "LPF-200") by causing polarized light in the reflection axis direction of a reflection-type polarizing film in the film for a reflecting portion to enter from its reflection-type polarizing film side.

Table 1

| | Reflection-type polarizing film | Absorption-type polarizer | | | Reflection axis transmittance |
|---|---|---|---|---|---|
| | Kind | Thickness | Ts | P | |
| | | (μm) | (%) | (%) | (%) |
| Example 1-1 | G4 | 5 | 42.1 | 99.997 | 0.009 |
| Example 1-2 | G4 | 5 | 43.0 | 99.994 | 0.006 |
| Example 1-3 | G4 | 5 | 43.6 | 99.98 | 0.006 |
| Example 1-4 | G4 | 12 | 42.8 | 99.995 | 0.014 |
| Example 1-5 | G4 | 12 | 44.7 | 99.0 | 0.017 |
| Example 2-1 | G5 | 5 | 42.1 | 99.997 | 0.005 |
| Example 2-2 | G5 | 5 | 43.0 | 99.994 | 0.006 |
| Example 2-3 | G5 | 5 | 43.6 | 99.98 | 0.012 |
| Example 2-4 | G5 | 12 | 42.8 | 99.995 | 0.005 |
| Example 2-5 | G5 | 12 | 44.7 | 99.0 | 0.026 |
| Comparative Example 1 | G4 | - | - | - | 1.669 |
| Comparative Example 2 | G5 | - | - | - | 3.274 |

The present invention is not limited to the above-mentioned embodiments, and various modifications may be made thereto. For example, the configurations described in the above-mentioned embodiments may each be replaced by substantially the same configuration, a configuration having the same action and effect, and a configuration that can achieve the same object.

Industrial Applicability

The lens unit according to the embodiment of the present invention may be used in, for example, a display body such as a pair of VR goggles.

Reference Signs List

**2**      display system
**4**      lens unit
**12**     display element
**14**     reflecting portion
**16**     first lens portion
**18**     half mirror
**20**     first retardation member
**22**     second retardation member
**24**     second lens portion
**30**     laminate
**32**     reflection-type polarizing member
**34**     absorption-type polarizing member
**36**     adhesion layer

**Claims**

1.  A lens unit to be used in a display system configured to display an image to a user, the lens unit comprising:

a reflecting portion including a reflection-type polarizing member and an absorption-type polarizing member arranged on a front side of the reflection-type polarizing member, the reflecting portion being configured to reflect light, which has been emitted to the front side from a display surface of a display element configured to display the image, and has passed through a polarizing member and a first λ/4 member;

a first lens portion arranged on an optical path between the display element and the reflecting portion;

a half mirror arranged between the display element and the first lens portion, the half mirror being configured to transmit the light emitted from the display element and to reflect the light reflected by the reflecting portion toward the reflecting portion; and

a second λ/4 member arranged on an optical path between the half mirror and the reflecting portion,

wherein a reflection axis transmittance when polarized light in a reflection axis direction of the reflection-type polarizing member is caused to enter a laminate of the reflection-type polarizing member and the absorption-type polarizing member from a reflection-type polarizing member side is 0.5% or less.

2. The lens unit according to claim 1, wherein a reflection axis of the reflection-type polarizing member and an absorption axis of the absorption-type polarizing member are arranged parallel to each other.

3. The lens unit according to claim 1, wherein the first lens portion and the half mirror are integrated.

4. The lens unit according to claim 1, further comprising a second lens portion arranged on the front side of the reflecting portion.

5. The lens unit according to claim 1,

wherein an angle formed by an absorption axis of the polarizing member in the display element and a slow axis of the first λ/4 member is from 40° to 50°, and

wherein an angle formed by the absorption axis of the polarizing member in the display element and a slow axis of the second λ/4 member is from 40° to 50°.

6. A laminate to be used in the reflecting portion of the lens unit of any one of claims 1 to 5, the laminate comprising:

the reflection-type polarizing member; and

the absorption-type polarizing member.

7. The laminate according to claim 6, wherein the reflection-type polarizing member and the absorption-type polarizing member are laminated via an adhesion layer.

8. The laminate according to claim 6, wherein a reflection axis of the reflection-type polarizing member and an absorption axis of the absorption-type polarizing member are arranged parallel to each other.

9. A display body, comprising the lens unit of any one of claims 1 to 5.

10. A method of producing a display body including the lens unit of any one of claims 1 to 5.

11. A display method, comprising:

a step of passing light representing an image, which has been emitted through a polarizing member and a first λ/4 member, through a half mirror and a first lens portion;

a step of passing the light, which has passed through the half mirror and the first lens portion, through a second λ/4 member;

a step of reflecting the light, which has passed through the second λ/4 member, toward the half mirror with a reflecting portion including a reflection-type polarizing member;

a step of enabling the light, which has been reflected by the reflecting portion and the half mirror, to penetrate through the reflection-type polarizing member of the reflecting portion with the second λ/4 member; and

a step of causing the light, which has penetrated through the reflection-type polarizing member, to penetrate through an absorption-type polarizing member,

wherein a reflection axis transmittance when polarized light in a reflection axis direction of the reflection-type polarizing member is caused to enter a laminate of the reflection-type polarizing member and the absorption-type polarizing member from a reflection-type polarizing member side is 0.5% or less.

FIG. 1

FIG. 2

FIG. 3

<table>
<tr><td colspan="2" align="center">**INTERNATIONAL SEARCH REPORT**</td><td>International application No.<br><br>**PCT/JP2023/006725**</td></tr>
</table>

| | |
|---|---|
| **A.** | **CLASSIFICATION OF SUBJECT MATTER** |

*G02B 27/02*(2006.01)i; *G02B 5/30*(2006.01)i
FI:   G02B27/02 Z; G02B5/30

According to International Patent Classification (IPC) or to both national classification and IPC

| | |
|---|---|
| **B.** | **FIELDS SEARCHED** |

Minimum documentation searched (classification system followed by classification symbols)

G02B27/00-30/60,5/30,G09G3/00-3/08,3/12,3/16,3/19-3/26,3/34,3/38,H04N5/64-5/655

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

G02B27/00-30/60,5/30,G09G3/00-3/08,3/12,3/16,3/19-3/26,3/34,3/38,H04N5/64-5/655

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | JP 2019-505854 A (SHENZHEN DLODLO NEW TECH CO LTD) 28 February 2019 (2019-02-28)<br>    paragraphs [0025]-[0051], [0071]-[0074], fig. 4, 8, 9 | 1-11 |
| Y | US 2020/0132994 A1 (SHANGHAI SEEO OPTRONICS TECHNOLOGY CO., LTD.) 30 April 2020 (2020-04-30)<br>    paragraphs [0044]-[0055], fig. 7 | 1-11 |
| Y | JP 2002-107655 A (MINOLTA CO LTD) 10 April 2002 (2002-04-10)<br>    paragraphs [0034], [0049]-[0056], [0062], [0063], fig. 3 | 1-11 |
| Y | JP 2008-102274 A (NITTO DENKO CORP) 01 May 2008 (2008-05-01)<br>    paragraphs [0006]-[0010], [0048]-[0056], [0065] | 1-11 |
| Y | JP 2006-251095 A (FUJI PHOTO FILM CO LTD) 21 September 2006 (2006-09-21)<br>    paragraphs [0009], [0010], [0109]-[0112] | 1-11 |
| Y | CN 113448101 A (GOERTEK INC) 28 September 2021 (2021-09-28)<br>    paragraphs [0006], [0016], [0021]-[0050], fig. 2 | 5-10 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 April 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT

**INTERNATIONAL SEARCH REPORT**
Information on patent family members

International application No.

**PCT/JP2023/006725**

| Patent document cited in search report | | | Publication date (day/month/year) | Patent family member(s) | | | Publication date (day/month/year) |
|---|---|---|---|---|---|---|---|
| JP | 2019-505854 | A | 28 February 2019 | US 2019/0033599 A1 paragraphs [0062]-[0088], [0112]-[0115], fig. 4, 8, 9<br>WO 2017/128183 A1<br>EP 3410173 A1<br>KR 10-2018-0105698 A | | | |
| US | 2020/0132994 | A1 | 30 April 2020 | WO 2020/014992 A1<br>CN 110161692 A | | | |
| JP | 2002-107655 | A | 10 April 2002 | US 2002/0057498 A1 paragraphs [0062], [0077]-[0084], [0090], [0091], fig. 3 | | | |
| JP | 2008-102274 | A | 01 May 2008 | (Family: none) | | | |
| JP | 2006-251095 | A | 21 September 2006 | (Family: none) | | | |
| CN | 113448101 | A | 28 September 2021 | WO 2023/273175 A1 | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021103286 A
- JP 2012073580 A
- JP 6470455 B